(19) Europäisches Patentamt
European Patent Office
Office européen des brevets

(11) EP 0 663 225 B1

(12) EUROPEAN PATENT SPECIFICATION

(45) Date of publication and mention of the grant of the patent:
**11.11.1998 Bulletin 1998/46**

(51) Int. Cl.$^6$: **B01D 19/04**

(21) Application number: **94120718.5**

(22) Date of filing: **27.12.1994**

# (54) Use of compositions for foam control

Verwendung von Zusammensetzungen zur Schaumregulierung

Usage de compositions pour le contrôle de mousse

(84) Designated Contracting States:
**DE FR GB IT NL SE**

(30) Priority: **28.12.1993 JP 349347/93**
**22.12.1994 US 362639**

(43) Date of publication of application:
**19.07.1995 Bulletin 1995/29**

(73) Proprietor:
**DOW CORNING CORPORATION**
**Midland Michigan 48686-0994 (US)**

(72) Inventors:
- **Tonge, Lauren Marie**
  **Sanford, MI 48657 (US)**
- **Kidera, Hideki,**
  **Haitsu S no. 201**
  **Kanagawa 259-13 (JP)**
- **Okada, Rei**
  **No. 108, 1673-1 Kaneko**
  **Kanagawa (JP)**
- **Noro, Tomohiro**
  **No. 207, 131-1 Kaneko**
  **Kanagawa (JP)**
- **Harkness, Bernadette Soo**
  **British Columbia Canada V5S 1A1 (CA)**

(74) Representative:
**Spott, Gottfried, Dr.**
**Spott, Weinmiller & Partner**
**Sendlinger-Tor-Platz 11**
**80336 München (DE)**

(56) References cited:

| | |
|---|---|
| EP-A- 0 121 210 | EP-A- 0 163 541 |
| EP-A- 0 298 402 | EP-A- 0 341 952 |
| EP-A- 0 427 263 | EP-A- 0 499 364 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.6/3.4

## Description

BACKGROUND OF THE INVENTION

The present invention relates to the use of a composition comprising a silicone antifoam agent and a cross-linked organopolysiloxane polymer having at least one polyoxyalkylene group. The compositions used in this invention exhibit excellent initial antifoam effect and dispersion stability.

A defoamer or antifoam agent is a material which, when added in low concentration to a foaming liquid controls the foam problem. Such materials, in addition, remove unsightly and troublesome surface foam and improve the filtration, watering, washing, and drainage of various types of suspensions, mixtures, and slurries. Defoamers have found application traditionally in such areas of use as the pulp and paper industry, paints and latex, coating processes, fertilizers, textiles, fermentation processes, metal working, adhesive, caulk and polymer manufacture, the sugar beet industry, oil well cement, cleaning compounds, detergents, cooling towers, and in chemical processes of varied description such as municipal and industrial primary and secondary waste water treatment.

It is essential for a defoamer that it be inert and not capable of reacting with the product or system in which it is used, and that it has no adverse effect on the product or system. A silicone antifoam agent is favorable, because it is chemically stable, rarely affects the treatment process, and exhibits a relatively high antifoam effect even in small amounts.

The use of various silicone containing compositions as antifoams or defoamers is known. In this regard, it is well established that this art is highly unpredictable and slight modifications can greatly alter the performance of such compositions. Most of the compositions contain silicone fluid (usually dimethylpolysiloxane), often in combination with small amount of silica filler. Many silicone foam control agents are known to suppress foam.

For example, Sullivan, in U.S. Patent No. 3,383,327, discloses an antifoam agent prepared from a polydiorganosiloxane fluid, silica, and a hydroxylated polydimethylsiloxane. Rauner, in U.S. Patent No. 3,455,839, discloses an aqueous defoaming composition consisting essentially of a polydimethylsiloxane fluid, a resin composed of $(CH_3)_3SiO_{1/2}$ units and $SiO_2$ units and a silica aerogel.

Raleigh et al., in U.S. Patent No. 4,012,334, disclose an antifoam composition comprising a dimethylpolysiloxane and a precipitated silica reacted with hexamethyldisilazane and a process for the preparation and use thereof. Edward, in U.S. Patent No. 4,145,308, discloses foam suppressant compositions, useful in both aqueous and hydrocarbon liquids, consisting essentially of a polydimethylsiloxane, a silicone resin comprised of $R_3SiO_{1/2}$ units and $SiO_2$ units wherein R is a monovalent hydrocarbon radical, and fumed or precipitated silica.

Maloney et al., in U.S. Patent No. 4,443,357, disclose a foam controlling composition consisting essentially of an organopolysiloxane having at least one terminal alkoxy or hydroxy group, an organic silicone compound having the general formula $R_2SiZ_2$ wherein R is a monovalent hydrocarbon group and Z is a hydrolyzable group containing nitrogen, and silica. Pape et al., in U.S. Patent No. 4,486,336, disclose foam suppressant compositions consisting essentially of a low viscosity polydimethylsiloxane, a high viscosity polydimethylsiloxane, a silicone resin comprising $(CH_3)_3SiO_{1/2}$ units and $SiO_2$ units, and silica.

Aizawa et al., in U.S. Patent Nos. 4,639,489 and 4,749,740 teach a method for producing a silicone defoamer composition wherein a complex mixture of polyorganosiloxanes, filler, a resinous siloxane, and a catalyst, to promote the reaction of the other components, are heated together at 50°C to 300°C.

Hydrophobed silica/polydimethylsiloxane antifoams are also reviewed in DEFOAMING: Theory and Industrial Applications; Garrett, P.R., Ed.; Surfactant Science Series 45; Marcel Dekker: New York, 1993, especially pages 246-249.

Additionally, these silicone antifoam agents may include various surfactants and dispersing agents in order in impart improved foam control or stability properties to the compositions. Thus, for example, Rosen, in U.S. Patent No. 4,076,648, teaches self-dispersible antifoam compositions consisting essentially of a lipophilic nonionic surface active agent homogeneously dispersed in a non-emulsified diorganopolysiloxane antifoam agent. This combination is said to promote dispersability in water without the need for emulsification.

Keil, in U.S. Patent No. 3,984,347, discloses a composition for controlling foam which comprises (1) a base oil of polyoxypropylene polymers, polyoxypropylene-polyoxyethylene copolymers or siloxane glycol copolymers, (2) an antifoam agent comprising a liquid polydimethylsiloxane, silica, and optionally a siloxane resin and (3) a siloxane copolymer dispersing agent. This composition enables the introduction of a diluted antifoam agent without having to make a water based emulsion.

McGee et al. in European Patent Application No. 341,952 disclose a foam control composition comprising (I) a silicone defoamer reaction product and (II) a silicone glycol copolymer, which is disclosed as being particularly effective in defoaming highly acidic or highly basic aqueous systems. However, when a foam control composition comprising a silicone antifoam agent and a silicone glycol copolymer is employed it is added in the form of a liquid or after dilution with water to a foamable liquid thus requiring higher levels of the silicone copolymer.

## SUMMARY OF THE INVENTION

The present invention relates to the use of a foam control composition comprising a silicone antifoam agent and a cross-linked organopolysiloxane polymer having at least one polyoxyalkylene group.

It is an object of this invention to provide the use of foam control compositions which exhibit excellent initial antifoam effect and superior dispersion stability.

It is also an object of this invention to provide the use of foam control compositions which exhibit persistent antifoam effect.

An additional object of this invention is to provide the use of foam control compositions which provide excellent dispersion stability in both diluents and in concentrated surfactant solutions.

These and other features, objects and advantages of the present invention will be apparent upon consideration of the following detailed description of the invention.

## BRIEF DESCRIPTION OF THE DRAWINGS

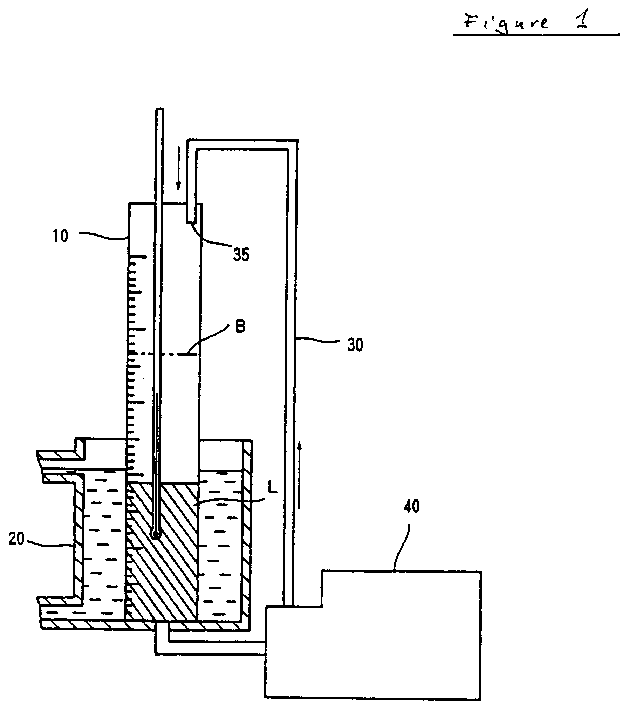

The above and the objects of the invention will be seen by reference to the detailed description of the invention taken in connection with the accompanying drawing, in which: FIG 1 is an elevational view of the device employed for testing the foam control compositions used according to the present invention.

## DETAILED DESCRIPTION OF THE INVENTION

The present invention relates to the use of a composition comprising: (I) a silicone antifoam agent and (II) a cross-linked organopolysiloxane polymer having at least one polyoxyalkylene group.

The compounds or compositions employed as the silicone antifoam agent herein are alkylated polysiloxane compounds of certain types, and can be used alone, or in combination with various solid materials such as silica aerogels, xerogels, or hydrophobic silicas of various types. In industrial practice, the term "silicone" has become a generic term which encompasses a variety of relatively high molecular weight polymers containing siloxane units and hydrocarbon groups of various types. The silicone antifoam agents useful as (I) are diethyl polysiloxanes, dipropyl polysiloxanes, dibutyl polysiloxanes, methylethyl polysiloxanes, and phenylmethyl polysiloxanes.
These polysiloxanes can have from about 20 to about 2,000 siloxane units

These compounds are readily prepared by the hydrolysis of the appropriate alkyl, aryl or mixtures of alkylaryl silicone dichlorides with water in a manner well known in the art.

A second type of silicone antifoam agent useful as (I) comprises (i) silicone and (ii) silica and can be prepared by admixing a silicone fluid of the type described hereinabove with a hydrophobic silica. Any of several known methods may be used for making a hydrophobic silica which can be employed herein in combination with a silicone fluid as the antifoam agent. For example, a fumed silica can be reacted with a trialkyl chlorosilane (i.e. "silanated") to affix hydrophobic trialkylsilane groups on the surface of the silica. Silicas having organosilyl groups on the surface thereof are well known and can be prepared in many ways such as by contacting the surface of a fumed or precipitated silica or silica aerogel with reactive silanes such as chlorosilanes or alkoxysilanes or with silanols or siloxanols or by reacting the silica with silanes or siloxanes. Various grades of silica having a particle size of several millimicrons to several microns and a specific surface area of about 500 to 50 $m^2/g$ are commercially available and several hydrophobic silicas having different surface treatments are also commercially available.

The silicone antifoam agent (I) can also be any of the silicone antifoam agents known in the art such as those disclosed in U.S. Patent Nos. 3,383,327, 3,455,839, 4,012,334, 4,145,308, 4,443,357, 4,486,336, 4,639,489, 4,749,740, 4,076,648, and 3,984,347 incorporated herein by reference to teach silicone antifoam agents which are suitable, and those skilled in the art are also directed to European Patent Application Nos. 341,952 and 217,501 which also disclose silicone antifoam agents suitable as component (I). In the above cited references which disclose antifoam agents suitable for use in the present invention, the silica present in the antifoam compounds/compositions is hydrophobed in-situ. This list is not intended as a restriction on the type of silicone antifoam agent which can be employed in the foam control compositions of this invention but is disclosed to exemplify the silicone antifoam agents suitable for use in the compositions of this instant invention.

The silicone antifoam agent (I) can also be a composition comprising the above polysiloxanes and from about 20 to 200 parts by weight for each 100 parts by weight of said polysiloxane of a silicone-glycol copolymer having its formula selected from

$$QR^6{}_2SiO(\underset{\displaystyle G}{\underset{|}{R^6SiO}})_j(R^6{}_2SiO)_kSiR^6{}_2Q \text{ or} \qquad (2a)$$

$$QR^6{}_2SiO(\underset{\displaystyle G}{\underset{|}{R^6SiO}})_jSiR^6{}_2Q \qquad (2b)$$

wherein $R^6$ is a monovalent hydrocarbon or halogenated hydrocarbon group, Q is $R^6$ or G, j has a value of 1 to 150, k has a value of 1 to 400 and G is a polyoxyalkylene group having its formula selected from the group consisting of

$$R^7(OCH_2CH_2)_m(O\underset{\displaystyle CH_3}{\underset{|}{CH_2CH}})_nOZ, \qquad (3a)$$

$$R^7(OCH_2CH_2)_mOZ, \text{ and} \qquad (3b)$$

$$R^7(O\underset{\displaystyle CH_3}{\underset{|}{CH_2CH}})_nOZ, \qquad (3c)$$

wherein $R^7$ is a divalent hydrocarbon group having 1 to 20 carbon atoms, m has an average value of about 1 to 50, n has an average value of 1 to about 50 and Z is selected from the group consisting of hydrogen, an alkyl radical having 1 to 6 carbon atoms and an acyl group having 2 to 6 carbon atoms, said silicone glycol being dispersible in water.

Monovalent hydrocarbon groups suitable as $R^6$ include alkyl radicals, such as methyl, ethyl, propyl, butyl, hexyl, octyl, and decyl; cycloaliphatic groups, such as cyclohexyl; aryl groups such as phenyl, tolyl, and xylyl; arylalkyl groups such as benzyl and phenylethyl. Highly preferred monovalent hydrocarbon groups are methyl and phenyl. Monovalent halogenated hydrocarbon groups include any monovalent hydrocarbon radical noted above and has at least one of its hydrogen atoms replaced with a halogen, such as fluorine, chlorine, or bromine. The group $R^7$ hereinabove is a divalent hydrocarbon group having from 1 to 20 carbon atoms which is exemplified by groups such as alkylene radicals including methylene, ethylene, propylene, butylene, phenylene, trimethylene, 2-methyltrimethylene, pentamethylene, hexamethylene, 3-ethyl-hexamethylene, octamethylene, $-CH_2(CH_3)CH-$, $-CH_2CH(CH_3)CH_2-$, and $-(CH_2)_{18}-$, cycloalkylene radicals such as cyclohexylene, arylene radicals such as phenylene, combinations of divalent hydrocarbon radicals such as benzylene ($-C_6H_4CH_2-$), hydroxylated hydrocarbon residues, chloroethylene, fluoroethylene, $-CH_2CH_2CH_2OCH_2-$, $-CH_2CH_2OCH_2CH_2-$, $-CH_2CH_2OCH(CH_3)CH_2-$, and $-CH_2OCH_2CH_2OCH_2CH_2-$. A more detailed description of the above composition can be found in European Patent Application No. 341,952. It is preferred that both Q and $R^6$ of component (II) are methyl radicals and that $R^7$ is the trimethylene group. It is further preferred that j is between 1 and 10, k is between 0 and 100 and m is between 7 and 12. The silicone glycols are well known in the art, many of these being available commercially, and further description thereof is considered unnecessary.

Component (II) of the foam control compositions of this invention is a cross-linked organopolysiloxane polymer having at least one polyoxyalkylene group. This class of compounds have been generally described by Bahr et.al. in U.S. Patent Nos. 4,853,474 and 5,136,068, incorporated herein by reference to teach cross-linked organopolysiloxane polymers suitable as (II). Compounds suitable as (II) include organopolysiloxane-polyoxyalkylene polymer molecules which are intentionally cross-linked through a cross-linking agent joined thereto by nonhydrolyzable bonds and being free of internal hydrolyzable bonds.

Component (II) may be obtained by a method comprising preparing a cross-linked organopolysiloxane polymer and combining a polyoxyalkylene group therewith or by a method comprising preparing a linear polyorganosiloxane having a polyoxyalkylene group combined therewith and cross-linking the same.

The cross-linking in this system can be attained through a variety of mechanisms. Those skilled in the art will readily recognize the systems wherein the required components are mutually compatible to carry out the method of preparing component (II). By way of illustration, an extensive bibliography of siloxane polymer chemistry is provided in *Siloxane Polymers*, S.J. Clarson and J.A. Semlyen eds., PTR Prentice Hall, Englewood Cliffs, N.J., (1993).

Not to construed as limiting this invention, it is preferred that the cross-linking bonds and the bonds to the organopolysiloxane-polyoxyalkylene molecules are not hydrolyzable, and that the cross-linking bridge contains no hydrolyzable bonds. It is recognized that similar emulsifiers wherein the polyoxyalkylene units are attached to the organopolysiloxane units via SiOC bonds are useful in applications not requiring extended stability under conditions where hydrolysis may occur. It is further recognized that such emulsifiers containing cross-links formed by SiOC bonds offer benefits of improved emulsion stability and consistency in such applications not requiring extended stability under conditions where hydrolysis may occur.

Preferably, the cross-linked siloxane polymer (II) is obtained by the addition reaction between the following components: (i) an organopolysiloxane having an Si-H group at each of its terminals and an organopolysiloxane having at least two allyl groups in the side chains of each molecules thereof, or (ii) more preferably, an organopolysiloxane having at least two Si-H groups in the side chains of each molecule thereof, and a polyorganopolysiloxane having each of its terminals blocked with an allyl group or a silanol group.

The preferred cross-linking radical is a vinyl terminated organosiloxane used in combination with an Si-H containing backbone. This organosiloxane bridge should not contain any reactive sites for the polyoxyalkylene moieties. An organosiloxane bridge cooperates with the siloxane backbones which it bridges to create a siloxane network at the interface of water and the silicone antifoam agent. This network is thought to be important in effecting the stabilizing properties and characteristics of the present invention. The siloxane bridge works with other types of antifoams. Other bridge types may be more suitable for non-silicone antifoams (e.g. an alkane bridge for mineral oil based antifoams).

The cross-linked organopolysiloxane polymer to be used as (II) should be one that satisfies the following conditions: (1) it has a three-dimensional crosslinked structure, (2) it has at least one polyoxyalkylene group, and (3) it has fluidity (i.e. it is "free flowing"). The term "three-dimensional cross-linked structure" used herein denotes a structure in which at least two organopolysiloxane molecules are bonded together through at least one bridge.

The exact number of organopolysiloxane-polyoxyalkylene polymer molecules which will be bridged together will vary within each compound. One limitation on such cross-linking is that the overall molecular weight must not become so great as to cause the material to gel. The extent of cross-linking must thus also be regulated relative to the molecular weight of each individual polymer molecule being cross-linked since the overall molecular weight must also be maintained sufficiently low to avoid gelling. In controlling the cross-linking reaction there is also the possibility that some uncross linked material will be present.

In the present inventon, it is preferred that component (II) is a compound having a viscosity of 100 to 100,000 $mm^2/s$ at 25°C and having the unit formula:

$$\begin{array}{l} -(R^8{}_2SiO)_e-(R^8\underset{\substack{|\\ A\\ |}}{Si}O)_f-(R^8R^9SiO)_g- \\ -(R^8{}_2SiO)_h-(R^8SiO)_i-(R^8R^9SiO)_p- \end{array} \qquad (4)$$

wherein $R^8$ is a monovalent hydrocarbon group, A is a group having its formula selected from $(CH_2)_q$-$(R^{10}{}_2SiO)_rSi(CH_2)_s$ or $O(R^{10}{}_2SiO)_r$-SiO wherein $R^{10}$ denotes a monovalent hydrocarbon group, q has a value of 2 to 10, r has a value of 1 to 5000, s has a value of 2 to 10, $R^9$ denotes a group having its formula selected from the group consisting of:

$$-(CH_2)_t - O - \underset{(EO)}{(CH_2CH_2O)_u} - \underset{(PO)}{(CH_2\overset{CH_3}{\overset{|}{C}}HO)_v} - \underset{(BO)}{(CH_2\overset{CH_2CH_3}{\overset{|}{C}}HO)_w} - R^{11}, \quad (5a)$$

$$-(CH_2)_t - O - \underset{(EO)}{(CH_2CH_2O)_u} - \underset{(PO)}{(CH_2\overset{CH_3}{\overset{|}{C}}HO)_v} - R^{11}, \quad (5b)$$

$$-(CH_2)_t - O - \underset{(EO)}{(CH_2CH_2O)_u} - \underset{(BO)}{(CH_2\overset{CH_2CH_3}{\overset{|}{C}}HO)_w} - R^{11}, \quad (5c)$$

$$-(CH_2)_t - O - \underset{(PO)}{(CH_2\overset{CH_3}{\overset{|}{C}}HO)_v} - \underset{(BO)}{(CH_2\overset{CH_2CH_3}{\overset{|}{C}}HO)_w} - R^{11}, \quad (5d)$$

$$-(CH_2)_t - O - \underset{(EO)}{(CH_2CH_2O)_u} - R^{11}, \quad (5e)$$

$$-(CH_2)_t - O - \underset{(PO)}{(CH_2\overset{CH_3}{\overset{|}{C}}HO)_v} - R^{11}, \text{ and} \quad (5f)$$

$$-(CH_2)_t - O - \underset{(BO)}{(CH_2\overset{CH_2CH_3}{\overset{|}{C}}HO)_w} - R^{11}, \quad (5g)$$

wherein $R^{11}$ is selected from a hydrogen atom, an alkyl group, an aryl group, or an acyl group, t has a value of 0 to 6, u has a value of from greater than zero to 150, v has a value of from greater than zero to 150, and w has a value of from greater than zero to 150, e has a value of 1 to 1000, f has a value of from greater than zero to 30, g has a value of 1 to 1000, h has a value of 1 to 1000, i has a value of from greater than zero to 30, p has a value of 1 to 1000. In the formula hereinabove EO, PO, and BO denote ethylene oxide, propylene oxide, and butylene oxide groups, respectively. The groups $R^8$ and $R^{10}$ can be the same or different as desired and are preferably alkyl groups or aryl groups and it is highly preferred that they are both methyl.

In the formulae hereinabove, it is preferred that e has a value of 1 to 500 and it is highly preferred that e has a value

of 1 to 250, it is preferred that f has a value of from greater than zero to 20 and it is highly preferred that f has a value of from 1 to 15, it is preferred that g has a value of 1 to 100 and it is highly preferred that g has a value of 1 to 50, it is preferred that h has a value of 1 to 500 and it is highly preferred that h has a value of 1 to 250, it is preferred that i has a value of from greater than zero to 20 and it is highly preferred that i has a value of from greater than 1 to 15, it is preferred that p has a value of 1 to 100 and it is highly preferred that p has a value of 1 to 50, it is preferred that q has a value of 2 to 6, it is preferred that r has a value of 1 to 2500 and it is highly preferred that r has a value of 20 to 1000, it is preferred that s has a value of 2 to 6, it is preferred that t has a value of 0 to 3, it is preferred that u has a value of from 1 to 100 and it is highly preferred that u has a value of 5 to 50, it is preferred that v has a value of from 1 to 100 and it is highly preferred that v has a value of 5 to 50, it is preferred that w has a value of from 1 to 100 and it is highly preferred that w has a value of 1 to 50. It is preferred that the cross-linked organopolysiloxane polymer of component (II) is triorganosiloxy endblocked at each terminal of the polymer, and it is highly preferred that the polymer is trimethylsiloxy endblocked at each terminal of the cross-linked polymer.

A specific example of the method for producing the crosslinked organopolysiloxane polymers will now be described. Preparation of a crosslinked organopolysiloxane polymer was done through the following steps: (I) a charging step in which a linear polysiloxane having hydrogen atoms in its side chains, a polysiloxane having vinyl groups and a catalyst for promoting the reaction, particularly platinum catalysts such as an isopropanol solution of $H_2PtCl_66H_2O$ with a 2% methanol solution of sodium acetate are put in a reactor, (II) an agitation/heating step in which agitation is conducted, for example, at 40°C for 30 minutes, (III) an input step in which a polyoxyalkylene and a solvent (isopropanol) are put in the reactor, (IV) a reflux step in which the isopropanol is refluxed, for example, at 80°C for 1.5 to 2 hours while monitoring the reaction rate of Si-H, (V) a stripping step in which the isopropanol is stripped, for example, at 130°C under a reduced pressure of 3,32 kPa (25 mmHg), and (VI) a final step in which the reduced pressure condition of step (V) is released and the reaction mixture is cooled to 60°C to obtain a final product.

An example of a linear polysiloxane having hydrogen atoms in its side chains suitable for step (I) is a polysiloxane having its formula selected from:

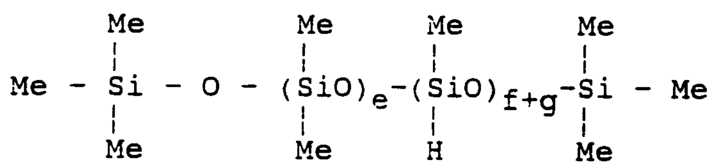 or (6a)

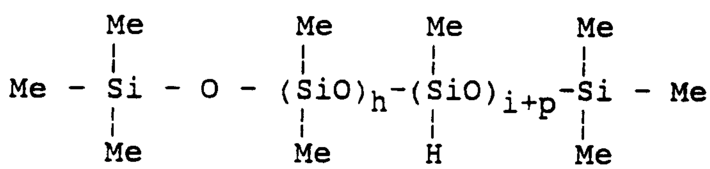 (6b)

therein Me hereinafter denotes methyl and e, f, g, h, i, and p are as defined above. An example of a polysiloxane having vinyl groups suitable for step (I) is a polysiloxane having the formula:

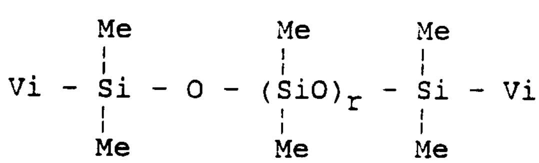 (7)

wherein Me denotes methyl, Vi hereinafter denotes vinyl, and r is as defined above. The reaction of these two compounds in step (II) results in a cross-linked siloxane polymer having the formula

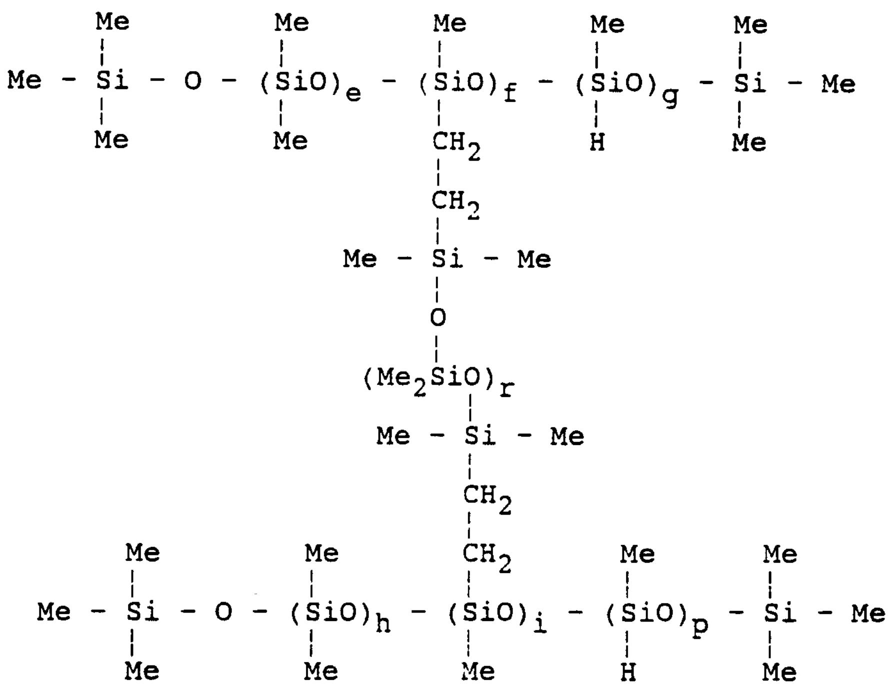

(8)

Introduction of a polyoxyalkylene group into the obtained crosslinked organopolysiloxane polymer (steps III-VI) is accomplished by reacting the crosslinked polymer with a polyoxyalkylene compound having its formula selected from the group consisting of

$$Vi - CH_2 - O - (EO)_u - (PO)_v - (BO)_w - H \quad (9a)$$

$$Vi - CH_2 - O - (EO)_u - (PO)_v - H, \quad (9b)$$

$$Vi - CH_2 - O - (EO)_u - (BO)_w - H, \quad (9c)$$

$$Vi - CH_2 - O - (PO)_v - (BO)_w - H, \quad (9d)$$

$$Vi - CH_2 - O - (EO)_u - H, \quad (9e)$$

$$Vi - CH_2 - O - (BO)_w - H, \text{ and} \quad (9f)$$

$$Vi - CH_2 - O - (PO)_v - H, \quad (9g)$$

wherein Vi, EO, PO, and BO are as denoted hereinabove, and u, v, and w are as defined above. The resulting compound was a cross-linked organopolysiloxane polymer having the formula

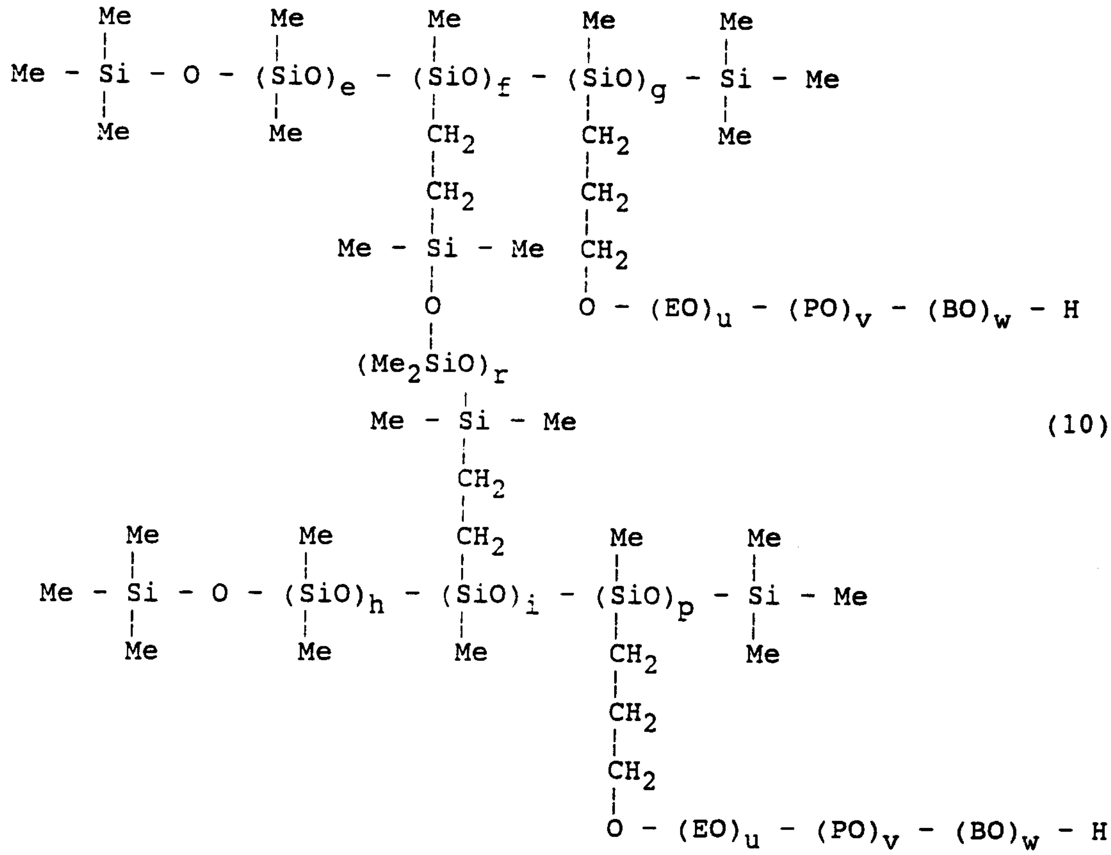

(10)

wherein Me, EO, PO, BO, e, f, g, h, i, p, and r are as defined hereinabove, u has a value of 0 to 150, v has a value of 0 to 150, and w has a value of 0 to 150, with the proviso that the value of u+v+w is at least one.

The foam control compositions used in the present invention can be produced by mixing 100 parts by weight of silicone antifoam agent (I) with 0.1 to 1900 parts by weight of cross-linked organopolysiloxane polymer (II).

More specifically, the foam control compositions used in this invention can be produced by a method in which cross-linked organopolysiloxane polymer (II) is added as it is or after dilution with an appropriate solvent or water to the silicone antifoam agent (I) and then a homogeneous dissolution or dispersion is carried out. Alternatively, the composition can be produced by a method in which component (II) is added at an appropriate time in the step of producing the foam control composition. These methods are not critical and any other appropriate ones may also be utilized.

The foam control compositions used in the present invention may contain other components on an optional basis insofar as the object of the present invention is not impaired, for example, inorganic fillers such as quartz, biocides when water is present, silica including hydrophobically treated silicas, fetal hydroxide micropowders such as aluminum hydroxide micropowder, calcium hydroxide micropowder, and magnesium hydroxide micropowder, bis amides such as those disclosed in U.S. Patent No. 5,192,336 incorporated herein by reference to disclose amides suitable for addition to the foam control compositions used in the present invention, flake-form fillers such as mica, dimethylpolysiloxanes, epoxy-functional diorganopolysiloxanes, and amino-functional diorganopolysiloxanes, as well as pigments, corrosion inhibitors, and dyes.

The foam control composition is added as it is in the form of a liquid or after dilution with water or another appropriate solvent to a foamable liquid. The foamable liquid may be a concentrate or be present at end-use levels. The compositions can be used as any kind of foam control agents, i.e. as defoaming agents and/or antifoam agents. Defoaming agents are generally considered as foam reducers whereas antifoam agents are generally considered as foam preventors. The compositions find utility as foam control compositions in various media or foamable liquids such as inks, coatings, paints, detergents (i.e. compositions which contain surfactants with or without detergency builders) such as liquid detergents, heavy duty liquid detergents and textile scours, black liquor, and pulp and paper manufacture.

Various solvents or diluents are available, such as nonaqueous liquid continuous phases, which are preferably selected from the group consisting of ethylene glycol, propylene glycol, polypropylene glycol, polyethylene glycol, copolymers of ethylene and propylene glycols, condensates of polypropylene glycol with polyols, condensates of polyethylene glycol with polyols, condensates of copolymers of ethylene and propylene glycols with polyols, alcohol alkoxylates, and alkylphenol alkoxylates. The nonaqueous phase is selected for ease of dispersibility and solubility in the foamable liquid. Poor solubility in the foamable liquid can lead to poor stability and poor performance of the foam control composition.

From the tables and examples below, it is apparent that the foam control compositions used in the present invention are excellent in not only the initial antifoam effect but also the persistence of the antifoam effect and excellent dispersion stability in both diluents and in concentrated surfactant solutions (i.e. no coalescence or aggregation was observed). If the foam control compositions are density matched to the media, phase stability (i.e. stability against sedimentation or creaming) is also maintained. All parts and percentages in the examples are on a weight basis and all measurements were made at 25°C unless indicated to the contrary.

The evaluation of antifoam performance can be carried out as follows:

Two foamable water-base liquids were prepared by dissolving cellulose and lignin compounds in water in a total concentration of 0.4% by weight to obtain foamable liquid A, and in a total concentration of 2.0% by weight to obtain foamable liquid B.

Use was made of a testing device shown in Figure 1. 300 g of the above foamable liquid A was introduced into a graduated glass cylinder (10) having an inner diameter of 50 mm, vertically erected in a thermostatic bath (20). This foamable liquid was circulated through a circulation pipe (30) in the direction of the arrow indicated in Figure 1 at a temperature adjusted to 70°C ± 1°C and at a flow rate of 2.0 ℓ per min by means of a disconnected magnetic pump (40), so that the foamable liquid continuously dropped from an outlet (35) of the circulation pipe (30) toward the surface of the liquid phase L in the glass cylinder (10) to thereby form a foaming condition in the glass cylinder (10).

This foaming was continued for 10 minutes, and then the foam control composition was added by the use of a micropipette in an amount such that the total amount of the first and second components was 5 ppm based on the foamable liquid.

After the addition of the foam control composition, and after the lapse of each given circulation time, the volume of a foam layer B (the surface thereof being indicated by the broken line) formed so as to stably remain on the liquid phase L in the glass cylinder (10) was measured by a scale on the glass cylinder (10). The initial antifoam effect and the persistence of the antifoam effect were evaluated on the basis of the measured volumes.

<u>EXAMPLE</u>

**PREPARATION OF CROSSLINKED ORGANOPOLYSILOXANE POLYMERS (CP):**

The starting materials used for producing the crosslinked organopolysiloxane polymers having at least one polyoxyalkylene group to be used in the present invention as compound (II) are as follows:

Component (A1): was a linear polysiloxane having the formula:

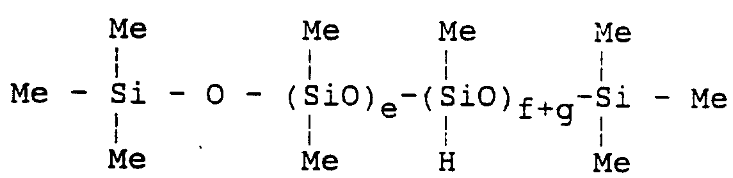

wherein e has a value in the range of 74 to 80, and f+g is in the range of 5 to 9.

Component (A2): was a linear polysiloxane having the formula:

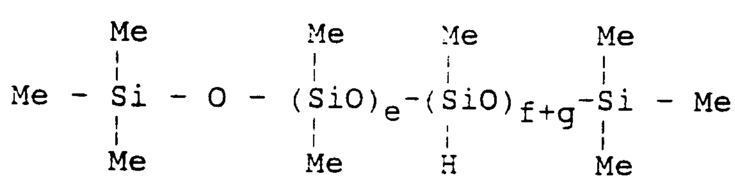

wherein e has a value of about 103 and f+g has a value of about 9.5.

Component (B1): was a polysiloxane having the formula

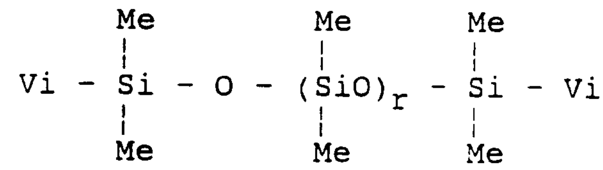

having a molecular weight ranging from 8000 to 15,000.

Component (B2): was a polysiloxane having the same formula as (B1) hereinabove except that B2 has a molecular weight in the range of 18,000 to 25,000.

Component (B3): was a polysiloxane having the formula $-(MeViSiO)_r-$ wherein r has a value in the range of 3 to 8.

Component (C1): was a polyoxyalkylene having the formula: $Vi\text{-}CH_2\text{-}O\text{-}(EO)_u\text{-}(PO)_v\text{-}H$ having a molecular weight in the range of from 2000 to 3000 and the ratio of u:v is 1:1.

Component (C2) was a polyoxyalkylene having the same chemical formula as C1 except that C2 has a molecular weight of about 1900.

Component (D): was isopropanol (as a solvent).

Component (E): was a 2% methanol solution of sodium acetate; and

Component (F): was a 2% isopropanol solution of $H_2PtCl_6 \cdot 6H_2O$.

Synthesis of cross-linked polymer CP1 was prepared by adding 64.4 g of (A1), 35.3 g of (B1), 0.47 g of (F), and 0.75 g of (E) in a reactor and the resulting mixture was agitated at 40°C for 30 minutes. Next, 200.2 g of (C1) and 90 g of (D) were added to the reactor and the isopropanol was refluxed at 80°C for 1.5 to 2 hours while monitoring the reaction rate of the Si-H. The resulting mixture was then stripped to remove the isopropanol at 130°C under a reduced pressure of 3,32 kPa (25 mmHg). Next the reaction mixture was cooled to 60°C to obtain a final product.

The obtained crosslinked polymer CP1 was a compound represented by Chemical Formula (10) described hereinabove wherein e and h were 76, f and i were 0.58, g and p were 6.42, u was 24, and v was 24, w was zero, and having a crosslinked chain length of 140 to 150, a crosslinking ratio of 8.3 and a viscosity of 31,400 mPa • s. As will be appreciated by those skilled in the art, the siloxane backbone and the polyoxyalkylene materials actually are mixtures and the average mean sizes are listed hereinabove.

The term "cross-linked chain length" used herein means the number of siloxane units in component (B), and this determines the value of r in Chemical Formula (10).

The term "cross-linking ratio" used herein means the ratio of the hydrogen atoms used for formation of cross-linkage to all of the hydrogen atoms of each molecule of component (A), which is expressed by the formula: $f/(f + g) \times 100\%$ or $i/(i+p) \times 100\%$ with respect to Chemical Formula (10) hereinabove.

Four types of crosslinked polymers, CP2 to CP5, were synthesized in the same manner as the one described above for cross-linked polymer CP1, except that the amount of components (A1), (B1), and (C1) were varied as specified in the following Table I. The properties of each of the crosslinked polymers are also given in Table I. With respect to the items not given in the table, the same characteristics as those for CP1 apply.

Table I

| Crosslinked polymer | CP1 | CP2 | CP3 | CP4 | CP5 |
|---|---|---|---|---|---|
| Component (g) (A1) | 64.4 | 64.9 | 65.4 | 65.9 | 66.5 |
| Component (g) (B1) | 35.3 | 30.5 | 26.9 | 21.7 | 16.8 |
| Component (g) (C1) | 200.2 | 204.4 | 207.7 | 212.3 | 216.7 |
| e,h | 76 | 76 | 76 | 76 | 76 |
| f,i | 0.58 | 0.50 | 0.44 | 0.35 | 0.27 |
| g,p | 6.42 | 6.50 | 6.56 | 6.65 | 6.73 |
| Crosslinked chain length | 140 -150 | 140 -150 | 140 -150 | 140 -150 | 140 -150 |
| Crosslinking ratio | 8.3 | 7.1 | 6.3 | 5.0 | 3.8 |
| Viscosity (mPa • s) | 31400 | 20200 | 14900 | 10750 | 7750 |

Three other types of cross-linked polymers, CP6 to CP8, were synthesized in the same manner as that described above for cross-linked polymer CP1, except that the type of components (A) and (B) were changed and the amounts of the components were varied as specified in Table II.

The properties of each of the cross-linked polymers are also given in Table II. With respect to the items not given in the Table, the same characteristics as those for CP1 apply.

A comparative siloxane polymer (CSP) was also synthesized in the same manner as described above, except that no component (B) was used resulting in a silicone glycol copolymer without a bridge, and the amounts of the other components were varied as specified in the following Table II. The properties thereof are also given in Table II. With respect to the items not given in the table, the same characteristics as those for CP1 apply.

Table II

| Cross linked siloxane | | CP6 | CP7 | CP8 | CSP |
|---|---|---|---|---|---|
| Component (A) | Type | A1 | A1 | A2 | A1 |
| | Amount | 62.7 | 72.2 | 107.1 | 65.4 |
| Component (B) | Type | B2 | B3 | B1 | - |
| | Amount | 33.1 | 0.5 | 42.8 | |
| Component (C) | Type | C1 | C1 | C2 | C1 |
| | Amount | 204.2 | 227.3 | 150 | 221.6 |
| e,h | | 76 | 76 | 103 | 76 |
| f,i | | 0.27 | 0.50 | .25 | - |
| g,p | | 6.73 | 6.50 | 9.25 | 7.00 |
| Cross linked chain length | | 420-430 | 3-5 | 140-150 | - |
| Cross linking Ratio | | 3.8 | 7.1 | 2.6 | - |
| Viscosity (mPa•s) | | 15000 | 7800 | 14600 | 3500 |

**Claims**

1. Use of a composition comprising:

   (I) a silicone antifoam agent selected from the group consisting of diethyl polysiloxanes, dipropyl polysiloxanes, dibutyl polysiloxanes, methylethyl polysiloxanes, and phenylmethyl polysiloxanes; and
   (II) a cross-linked organopolysiloxane polymer having at least one polyoxyalkylene group as foam control agent.

2. Use according to Claim 1, wherein (I) further comprises silica.

3. Use according to Claim 1, wherein (I) further comprises from 20 to 200 parts by weight for each 100 parts by weight of silicone antifoam agent of a silicone-glycol copolymer having its formula selected from

$$QR^6_2SiO(\underset{\underset{G}{|}}{R^6SiO})_j(R^6_2SiO)_kSiR^6_2Q \qquad \text{or}$$

$$QR^6_2SiO(\underset{\underset{G}{|}}{R^6SiO})_jSiR^6_2Q$$

wherein $R^6$ is a monovalent hydrocarbon or halogenated hydrocarbon group, Q is $R^6$ or G, j has a value of 1 to 150,

k has a value of 1 to 400 and G is a polyoxyalkylene group having its formula selected from the group consisting of

$$R^7(OCH_2CH_2)_m(OCH_2\underset{\displaystyle CH_3}{\underset{|}{C}}H)_nOZ,$$

$$R^7(OCH_2CH_2)_mOZ,\ \text{and}$$

$$R^7(OCH_2\underset{\displaystyle CH_3}{\underset{|}{C}}H)_nOZ,$$

wherein $R^7$ is a divalent hydrocarbon group having 1 to 20 carbon atoms, m has an average value of 1 to 50, n has an average value of 1 to 50 and z is selected from the group consisting of hydrogen atom, an alkyl radical having 1 to 6 carbon atoms and an acyl group having 2 to 6 carbon atoms.

**4.** Use according to Claim 1, wherein (II) is a compound having a viscosity of 100 to 100,000 $mm^2/s$ at 25°C and having the unit formula:

$$\begin{array}{c} -(R^8{}_2SiO)_e-(R^8\underset{|}{Si}O)_f-(R^8R^9SiO)_g- \\ A \\ -(R^8{}_2SiO)_h-(R^8\overset{|}{Si}O)_i-(R^8R^9SiO)_p- \end{array}$$

wherein $R^8$ is a monovalent hydrocarbon group, A is a group having its formula selected from $(CH_2)_q$-$(R^{10}{}_2SiO)_rSi(CH_2)_s$ or $O(R^{10}{}_2SiO)_r$-SiO wherein $R^{10}$ denotes a monovalent hydrocarbon group, q has a value of 2 to 10, r has a value of 1 to 5000, s has a value of 2 to 10, $R^9$ denotes a group having its formula selected from the group consisting of:

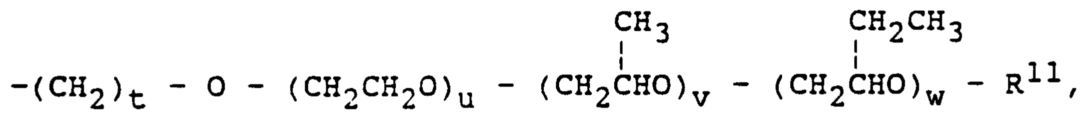

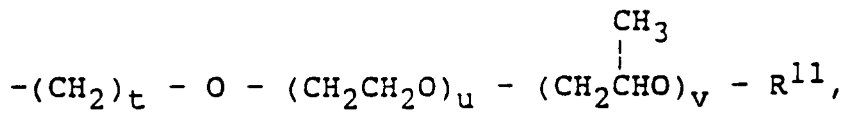

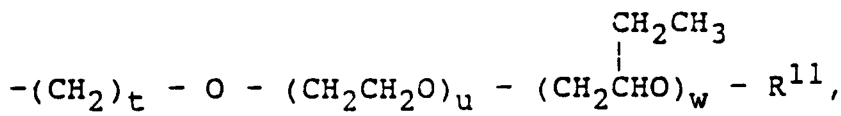

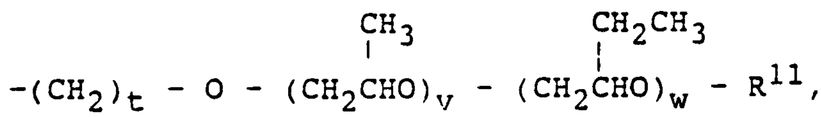

$-(CH_2)_t - O - (CH_2CH_2O)_u - R^{11}$,

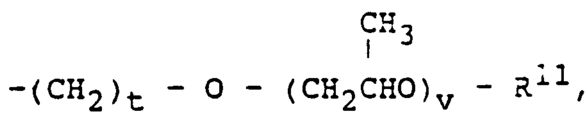 and

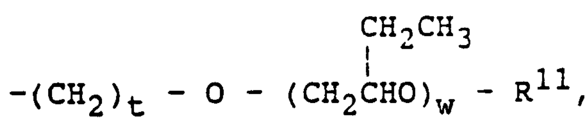

wherein $R^{11}$ is selected from a hydrogen atom, an alkyl group, an aryl group, or an acyl group, t has a value of 0 to 6, u has a value of from greater than zero to 150, v has a value of from greater than zero to 150, and w has a value of from greater than zero to 150, e has a value of 1 to 1000, f has a value of from greater than zero to 30, g has a value of 1 to 1000, h has a value of 1 to 1000, i has a value of from greater than zero to 30, p has a value of 1 to 1000.

5. Use according to Claim 1, wherein (II) is a compound having the formula:

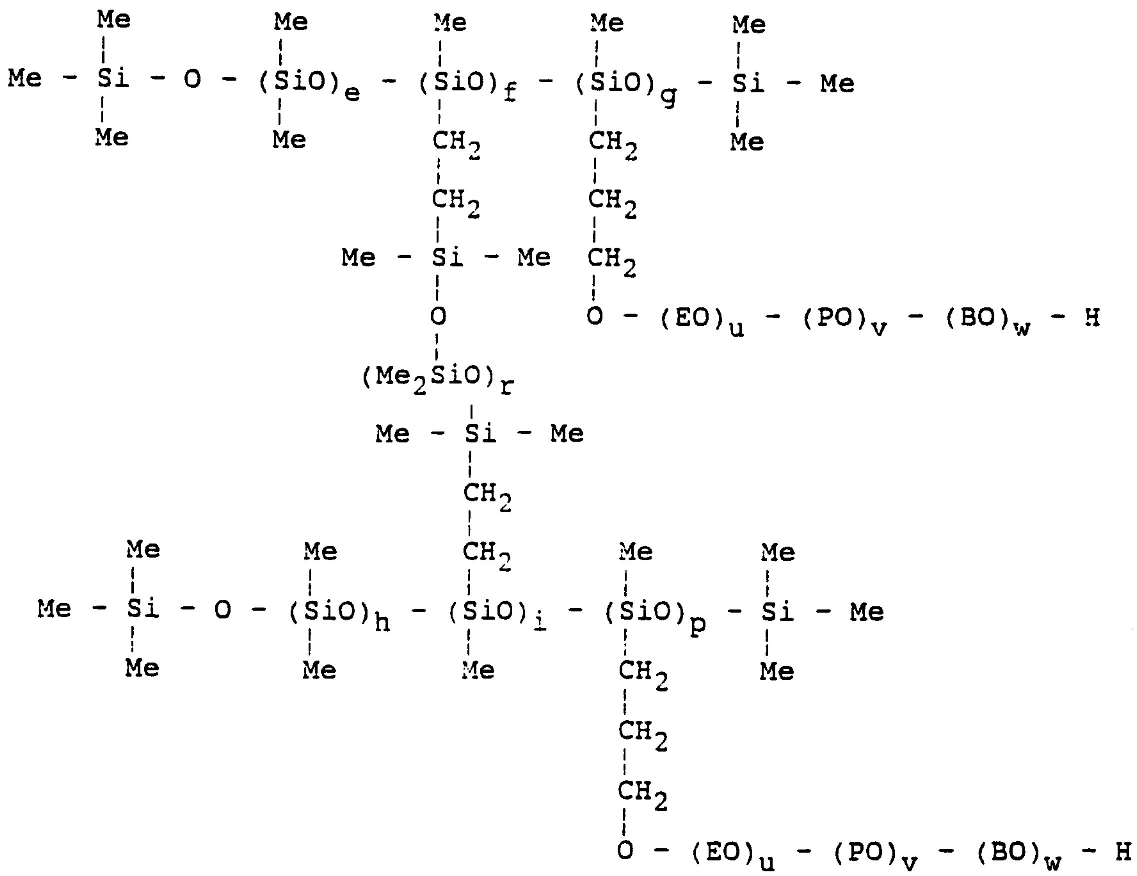

wherein Me denotes methyl, EO denotes ethylene oxide, PO denotes propylene oxide, BO denotes butylene oxide, e has a value of 1 to 1000, f has a value of from greater than zero to 30, g has a value of 1 to 1000, h has a value of 1 to 1000, i has a value of from greater than zero to 30, p has a value of 1 to 1000, r has a value of 1 to 5000, u has a value of 0 to 150, v has a value of 0 to 150, and w has a value of 0 to 150, with the proviso that the value of u+v+w is at least one.

**6.** Use according to Claim 1, wherein the composition further comprises a compound selected from the group consisting of inorganic fillers, biocides, metal hydroxides, calcium hydroxides, magnesium hydroxides, bis amides, flake-form fillers, dimethylpolysiloxanes, epoxy-functional diorganopolysiloxanes, amino-functional diorganopolysiloxanes, pigments, corrosion inhibitors, and dyes.

**7.** Use according to Claim 1, wherein the composition further comprises a liquid continuous phase selected from the group consisting of water, ethylene glycol, propylene glycol, polypropylene glycol, polyethylene glycol, copolymers of ethylene and propylene glycols, condensates of polypropylene glycol with polyols, condensates of polyethylene glycol with polyols, condensates of copolymers of ethylene and propylene glycols with polyols, alcohol alkoxylates, alkylphenol alkoxylates, and mixtures thereof.

**Patentansprüche**

**1.** Verwendung einer Zusammensetzung, die

(I) ein Siliconantischaummittel, das unter Diethylpolysiloxanen, Dipropylpolysiloxanen, Dibutylpolysiloxanen, Methylethylpolysiloxanen und Phenylmethylpolysiloxanen ausgewählt ist, und
(II) ein vernetztes Organopolysiloxanpolymer mit mindestens einer Polyoxyalkylengruppe umfaßt, als Schaumsteuermittel.

**2.** Verwendung nach Anspruch 1, wobei (I) des weiteren Siliciumdioxid umfaßt

3. Verwendung nach Anspruch 1, wobei (I) des weiteren, bezogen auf jeweils 100 Gew.-Teile des Siliconantischaummittels, 20-200 Gew.-Teile eines Siliconglykolcopolymers einer Formel, die unter den folgenden Formeln ausgewählt ist:

$$QR^6_2SiO(\underset{\underset{G}{|}}{R^6SiO})_j(R^6_2SiO)_kSiR^6_2Q \quad \text{und}$$

$$QR^6_2SiO(\underset{\underset{G}{|}}{R^6SiO})_jSiR^6_2Q$$

worin $R^6$ für eine einwertige Kohlenwasserstoff- oder halogenierte Koblenwasserstoffgruppe steht, Q $R^6$ oder G bedeutet, j einen Wert von 1 bis 150 besitzt, k einen Wert von 1 bis 400 besitzt und G eine Polyoxyalkylengruppe mit einer Formel, die unter den folgenden Formeln ausgewählt ist:

$$R^7(OCH_2CH_2)_m(OCH_2\underset{\underset{CH_3}{|}}{CH})_nOZ,$$

$$R^7(OCH_2CH_2)_mOZ \quad \text{und}$$

$$R^7(OCH_2\underset{\underset{CH_3}{|}}{CH})_nOZ,$$

worin $R^7$ für eine zweiwertige Kohlenwasserstoffgruppe mit 1 bis 20 Kohlenstoffatom(en) steht, m einen Mittelwert von 1 bis 50 besitzt, n einen Mittelwert von 1 bis 50 besitzt und Z unter Wasserstoffatomen, Alkylresten mit 1 bis 6 Kohlenstoffatom(en) und Acylgruppen mit 2 bis 6 Kohlenstoffatomen ausgewählt ist, umfaßt.

4. Verwendung nach Anspruch 1, wobei (II) eine Verbindung mit einer Viskosität von 100 bis 100.000 $mm^2/s$ bei $25^0C$ und mit Einheiten der folgenden Formel ist:

$$-(R^8_2SiO)_e-(R^8SiO)_f-(R^8R^9SiO)_g-$$
$$|$$
$$A$$
$$|$$
$$-(R^3_2SiO)_h-(R^8SiO)_i-(R^3R^9SiO)_p-$$

worin $R^8$ für eine einwertige Kohlenwasserstoffgruppe steht, A eine Gruppe bedeutet, deren Formel aus $(CH_2)_q$-$(R^{10}_2SiO)_rSi(CH_2)_s$ oder $O(R^{10}_2SiO)_r$-SiO, worin $R^{10}$ für eine einwertige Kohlenwasserstoffgruppe steht, q einen Wert von 2 bis 10 besitzt, r einen Wert von 1 bis 5000 besitzt und s einen Wert von 2 bis 10 besitzt, ausgewählt ist, $R^9$ für eine Gruppe einer Formel steht, die unter folgenden Formeln ausgewählt ist:

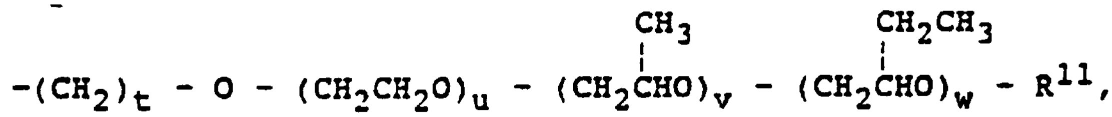

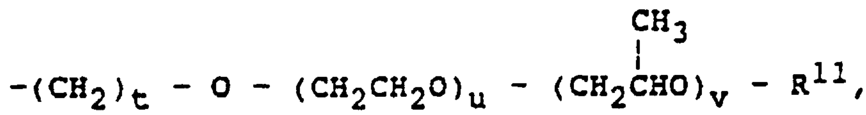

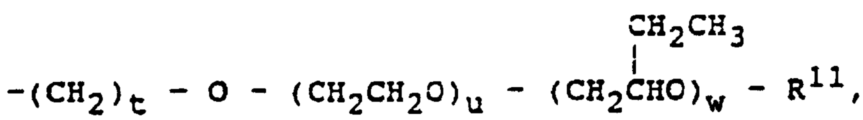

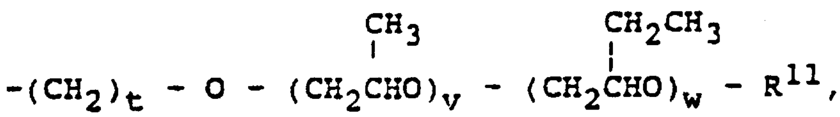

$-(CH_2)_t - O - (CH_2CH_2O)_u - R^{11}$,

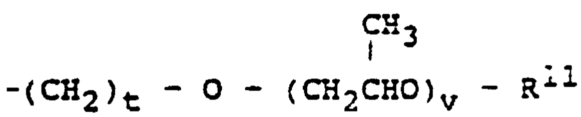

und

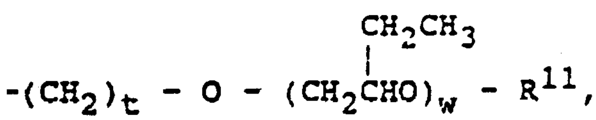

worin $R^{11}$ unter Wasserstoffatomen, Alkylgruppen, Arylgruppen und Acylgruppen ausgewählt ist, t einen Wert von 0 bis 6 besitzt, u einen Wert von größer als 0 bis 150 besitzt, v einen Wert von größer als 0 bis 150 besitzt und w einen Wert von größer als 0 bis 150 besitzt, e einen Wert von 1 bis 1000 aufweist, f einen Wert von größer als 0 bis 30 aufweist, g einen Wert von 1 bis 1000 aufweist, h einen Wert von 1 bis 1000 aufweist, i einen Wert von größer als 0 bis 30 aufweist und p einen Wert von 1 bis 1000 aufweist.

5. Verwendung nach Anspruch 1, worin (II) eine Verbindung der folgenden Formel ist:

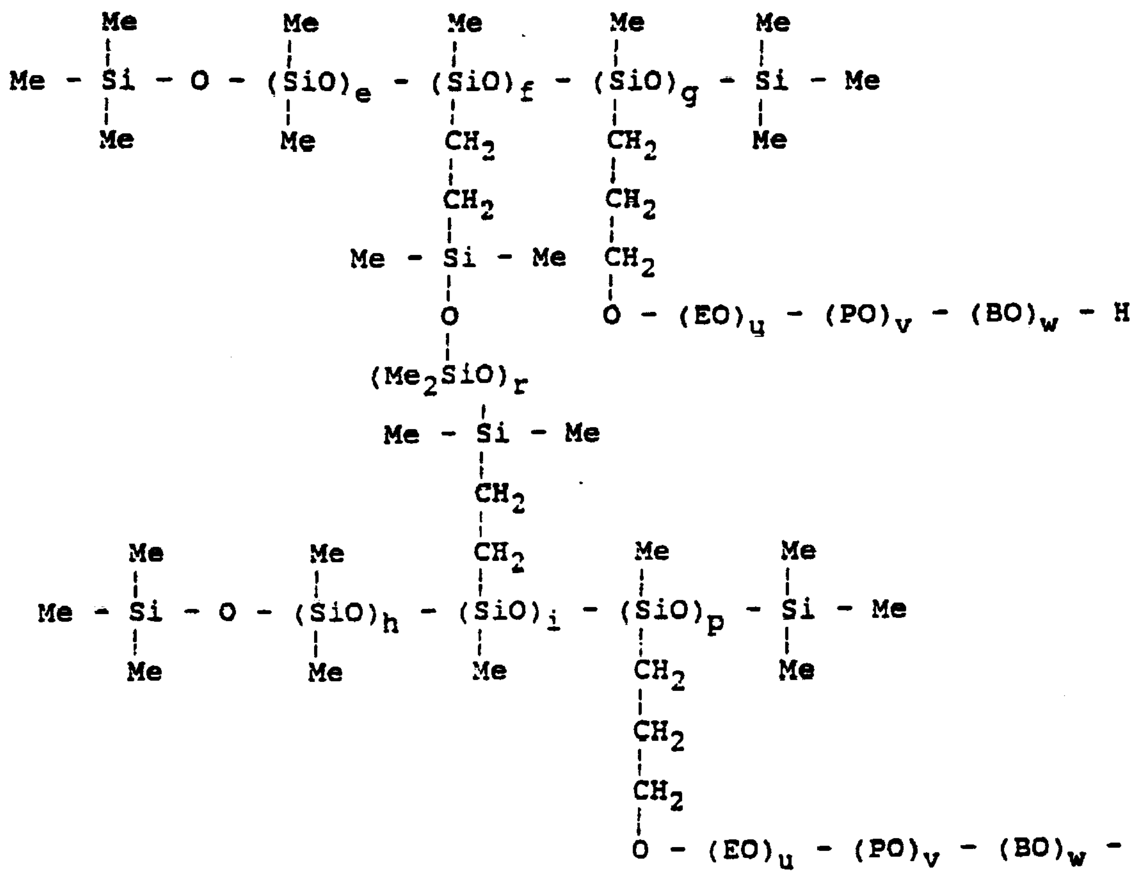

worin Me Methyl bedeutet, EO Ethylenoxid bedeutet, PO Propylenoxid bedeutet, BO Butylenoxid bedeutet, e einen Wert von 1 bis 1000 besitzt, f einen Wert von größer als 0 bis 30 besitzt, g einen Wert von 1 bis 1000 besitzt, h einen Wert von 1 bis 1000 besitzt, i einen Wert von größer als 0 bis 30 besitzt, p einen Wert von 1 bis 1000 besitzt, r einen Wert von 1 bis 5000 besitzt, u einen Wert von 0 bis 150 besitzt, v einen Wert von 0 bis 150 besitzt und w einen Wert von 0 bis 150 besitzt, wobei gilt, daß der Wert u+v+w mindestens 1 ist.

6. Verwendung nach Anspruch 1, wobei die Zusammensetzung des weiteren eine Verbindung umfaßt, die unter anorganischen Füllstoffen, bioziden Verbindungen, Metallhydroxiden, Calciumhydroxiden, Magnesiumhydroxiden, Bisamiden, flockenförmigen Füllstoffen, Dimethylpolysiloxanen, epoxyfunktionellen Diorganopolysiloxanen, aminofunktionellen Diorganopolysiloxanen, Pigmenten, Korrosionsinhibitoren und Farbstoffen ausgewählt ist.

7. Verwendung nach Anspruch 1, wobei die Zusammensetzung des weiteren eine flüssige kontinuierliche Phase umfaßt, die unter Wasser, Ethylenglykol, Propylenglykol, Polypropylenglykol, Polyethylenglykol, Copolymeren von Ethylen- und Propylenglykolen, Kondensaten von Polypropylenglykol mit Polyolen, Kondensaten von Polyethylenglykol mit Polyolen, Kondensaten von Copolymeren von Ethylen- und Propylenglykolen mit Polyolen, Alkoholalkoxylaten, Alkylphenolalkoxylaten und Gemischen hiervon ausgewählt ist.

**Revendications**

1. Utilisation d'une composition comprenant :

   (I) un agent inhibiteur de mousse du type silicone choisi dans la classe formée par les diéthylpolysiloxanes, les dipropylpolysiloxanes, les dibutylpolysiloxanes, les méthyléthylpolysiloxanes et les phénylméthylpolysiloxanes ; et

   (II) un polymère organopolysiloxane réticulé ayant au moins un groupe polyoxyalkylène comme agent de maîtrise de la mousse.

**2.** Utilisation selon la revendication 1, dans laquelle (I) comprend en outre de la silice.

**3.** Utilisation selon la revendication 1, dans laquelle (I) comprend en outre 20 à 200 parties en poids, pour 100 parties en poids d'agent inhibiteur de mousse du type silicone, d'un copolymère silicone-glycol dont la formule est choisie parmi

$$QR^{6}_{2}SiO(\underset{\substack{|\\ G}}{R^{6}Si}O)_{j}(R^{6}_{2}SiO)_{k}SiR^{6}_{2}Q \qquad \text{ou}$$

$$QR^{6}_{2}SiO(\underset{\substack{|\\ G}}{R^{6}Si}O)_{j}SiR^{6}_{2}Q$$

où $R^6$ est un groupe hydrocarboné ou hydrocarboné halogéné monovalent, Q est $R^6$ ou G, la valeur de j est de 1 à 150, la valeur de k est de 1 à 400 et G est un groupe polyoxyalkylène dont la formule est choisie dans la classe formée par

$$R^{7}(OCH_{2}CH_{2})_{m}(OCH_{2}\underset{\substack{|\\ CH_{3}}}{CH})_{n}OZ,$$

$$R^{7}(OCH_{2}CH_{2})_{m}OZ, \qquad \text{et}$$

$$R^{7}(OCH_{2}\underset{\substack{|\\ CH_{3}}}{CH})_{n}OZ,$$

où $R^7$ est un groupe hydrocarboné divalent ayant 1 à 20 atomes de carbone, la valeur moyenne de m est de 1 à 50, la valeur moyenne de n est de 1 à 50 et Z est choisi dans la classe formée par un atome d'hydrogène, un radical alkyle ayant 1 à 6 atomes de carbone et un groupe acyle ayant 2 à 6 atomes de carbone.

**4.** Utilisation selon la revendication 1, dans laquelle (II) est un composé ayant une viscosité de 100 à 100 000 $mm^2/s$ à 25°C et ayant la formule de motifs :

$$-(R^{8}_{2}SiO)_{e}-(R^{8}SiO)_{f}-(R^{8}R^{9}SiO)_{g}-$$
$$\qquad\qquad\qquad |$$
$$\qquad\qquad\qquad A$$
$$\qquad\qquad\qquad |$$
$$-(R^{8}_{2}SiO)_{h}-(R^{8}SiO)_{i}-(R^{8}R^{9}SiO)_{p}-$$

où $R^8$ est un groupe hydrocarboné monovalent, A est un groupe dont la formule est choisie parmi $(CH_2)_q$-$(R^{10}{}_2SiO)_rSi(CH_2)_s$ ou $O(R^{10}{}_2SiO)_r$-SiO où $R^{10}$ représente un groupe hydrocarboné monovalent, la valeur de q est de 2 à 10, la valeur de r est de 1 à 5000, la valeur de s est de 2 à 10, $R^9$ représente un groupe dont la formule est choisie dans la classe formée par :

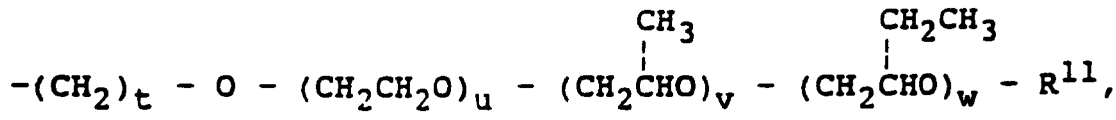

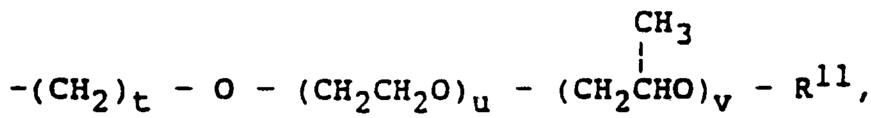

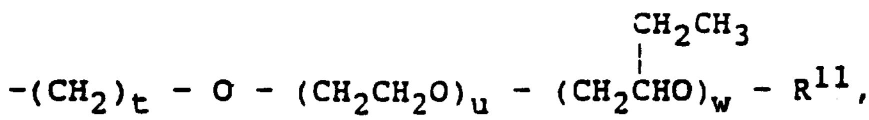

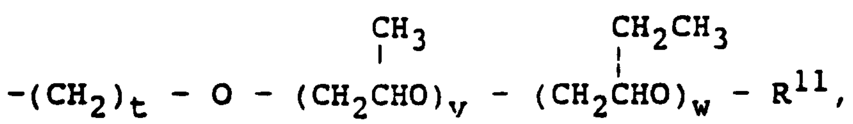

$-(CH_2)_t - O - (CH_2CH_2O)_u - R^{11}$,

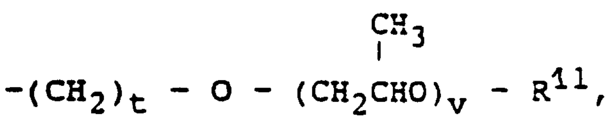 et

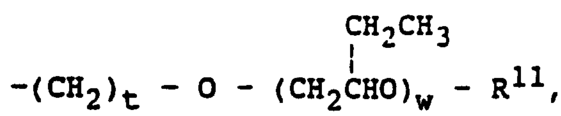

où $R^{11}$ est choisi parmi un atome d'hydrogène, un groupe alkyle, un groupe aryle ou un groupe acyle, la valeur de t est de 0 à 6, la valeur de u est de plus de zéro à 150, la valeur de v est de plus de zéro à 150 et la valeur de w est 5 de plus de zéro à 150, la valeur de e est de 1 à 1000, la valeur de f est de plus de zéro à 30, la valeur de g est de 1 à 1000, la valeur de h est de 1 à 1000, la valeur de i est de plus de zéro à 30, la valeur de p est de 1 à 1000.

**5.** Utilisation selon la revendication 1, dans 10 laquelle (II) est un composé ayant la formule :

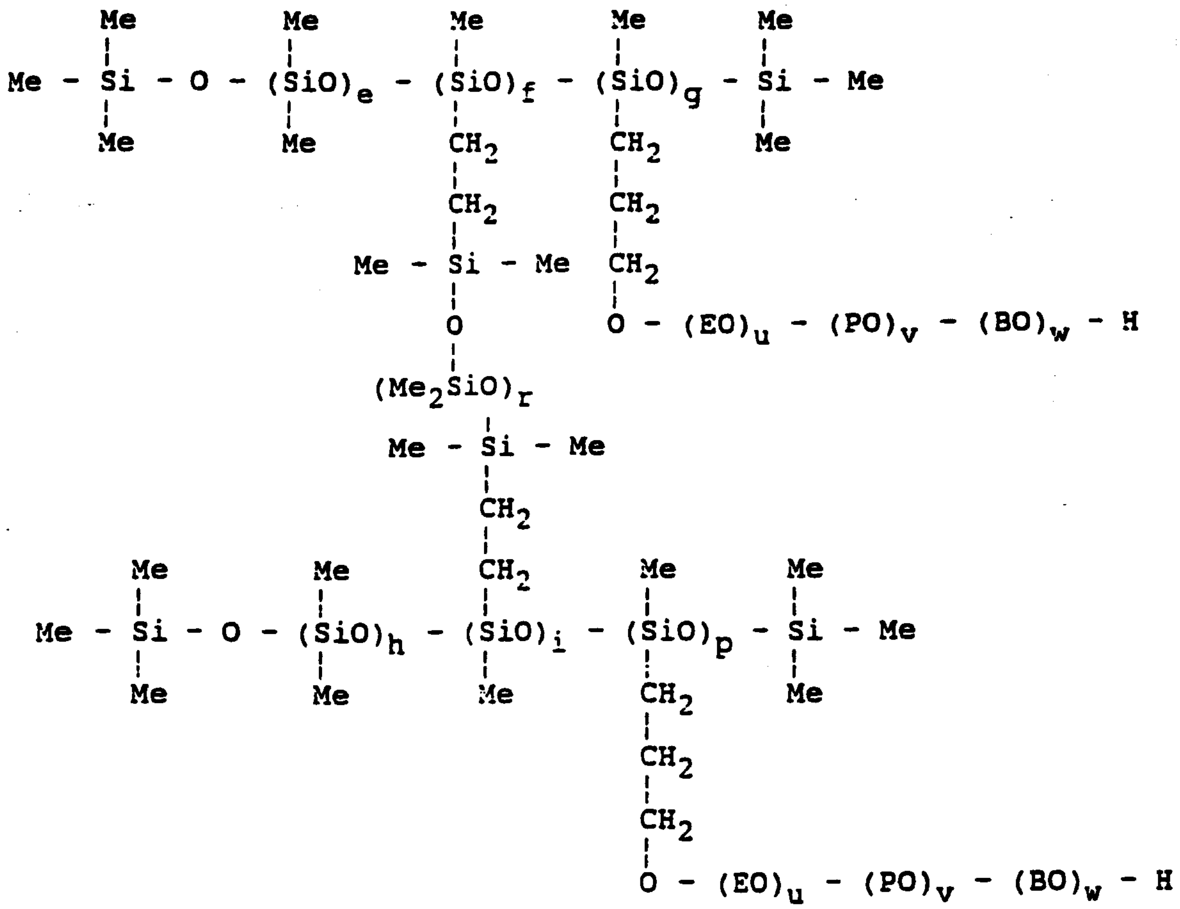

où Me représente le radical méthyle, EO représente l'oxyde d'éthylène, PO représente l'oxyde de propylène, BO représente l'oxyde de butylène, la valeur de e est de 1 à 1000, la valeur de f est de plus de zéro à 30, la valeur de g est de 1 à 1000, la valeur de h est de 1 à 1000, la valeur de i est de plus de zéro à 30, la valeur de p est de 1 à 1000, la valeur de r est de 1 à 5000, la valeur de u est de 0 à 150, la valeur de v est de 0 à 150 et la valeur de w est de 0 à 150, avec la condition que la valeur de u+v+w soit au moins 1.

6. Utilisation selon la revendication 1, dans laquelle la composition comprend en outre un composé choisi dans la classe formée par les charges minérales, les biocides, les hydroxydes métalliques, les hydroxydes de calcium, les hydroxydes de magnésium, les bisamides, les charges en forme de paillettes, les diméthylpolysiloxanes, les diorganopolysiloxanes à fonction époxy, les diorganopolysiloxanes à fonction amine, les pigments, les inhibiteurs de corrosion et les colorants.

7. Utilisation selon la revendication 1, dans laquelle la composition comprend en outre une phase liquide continue choisie dans la classe formée par l'eau, l'éthylène-glycol, le propylène-glycol, le polypropylèneglycol, le polyéthylène-glycol, les copolymères d'éthylène- et propylène-glycols, les produits de condensation de polypropylène-glycol avec des polyols, les produits de condensation de polyéthylène-glycol avec des polyols, les produits de condensation de copolymères d'éthylène- et propylène-glycols avec des polyols, les alcoxylats d'alcools, les alcoxylats d'alkylphénols, et leurs mélanges.

Figure 1